# DEMANDE DE BREVET EUROPEEN

(11) **EP 0 617 275 A1**
(43) Date de publication de la demande: **28.09.1994**
(21) Numéro de dépôt: 94400611.3
(22) Date de dépôt: 22.03.1994
(51) Int. Cl.: G01N 21/78, G01N 31/22

(54) **Détecteur de vapeurs d'acide ou d'hexafluorure d'uranium**

(30) Priorité: 24.03.1993 FR 9303393
(71) Demandeur: EURODIF PRODUCTION, F-26702 Pierrelatte Cédex (FR)
(72) Inventeur: Bonnaventure, Jean-Paul, F-30330 Tresques (FR); Pagnon, Guy, F-26200 Montelimar (FR)
(74) Mandataire: Des Termes, Monique

(57) **Abrégé**

Ce détecteur comprend une pastille (1) de poudres comprimées, formée d'une première poudre d'un matériau colorimétrique réversible capable de changer de couleur en présence de vapeurs d'acide ou de UF₆ et d'une seconde poudre inattaquable par des vapeurs d'acide, et/ou de UF₆ et/ou de dérivés fluorés, cette seconde poudre servant de liant aux grains de la première poudre.

La pastille 1 peut être disposée dans un adaptateur 3 introduit dans l'enceinte E à conrôler, qui peut être couplé à un tube endoscopique 5 en vue de détecter le changement de couleur de la pastille à l'extérieur de l'enceinte.

## Description

La présente invention a pour objet un détecteur de vapeurs d'acides tels que l'acide fluorhydrique, l'acide nitrique et l'acide chlorhydrique, ou d'hexafluorure d'uranium, destiné à signaler rapidement la présence d'une faible concentration de vapeurs d'acide ou d'UF₆ dans des enceintes ou installations dans lesquelles la température peut atteindre des valeurs de 130°C.

Ce détecteur est destiné à la surveillance et au contrôle de la quantité d'acide (HF, HCl, HNO3...) ou d'UF₆, chaque fois qu'il peut s'en dégager, afin d'améliorer la sécurité de l'installation concernée. Elle s'applique dans un grand nombre d'industries et notamment chimiques et nucléaires.

Il existe un certain nombre de dispositifs permettant la détection de vapeurs d'acide tel que l'acide fluorhydrique. Ces dispositifs connus sont du type cellule électrochimique, à papier pH, tube colorimétrique ou système chimico-ionique.

Tous ces dispositifs connus fonctionnent à basses températures, c'est-à-dire à des températures inférieures à 50°C et généralement comprises entre 0 et 40°C. En outre, leur coût de fabrication est très élevé.

Aussi, l'invention a pour objet un nouveau détecteur de vapeurs d'acides ou d'hexafluorure d'uranium permettant notamment de remédier à ces inconvénients. Ce détecteur permet en particulier la détection dans des enceintes thermostatées où la température est de l'ordre de 130°C et son coût de fabrication est au moins cinq fois plus faible que celui des dispositifs de l'art antérieur. En outre, il présente une sensibilité comparable à celle des dispositifs connus.

De façon plus précise, l'invention a pour objet un détecteur de vapeurs d'acide ou d'hexafluorure d'uranium, caractérisé en ce qu'il comprend une pastille de poudres comprimées, formée d'une première poudre d'un matériau colorimétrique réversible capable de changer de couleur en présence de vapeurs d'acide ou d'hexafluorure d'uranium, et d'une seconde poudre inattaquable par des vapeurs dudit acide, d'hexafluorure d'uranium et/ou de dérivés fluorés, cette seconde poudre servant de liant aux grains de la première poudre.

Avantageusement, le détecteur comprend de plus des moyens de détection du changement de couleur du matériau colorimétrique.

En plus des avantages mentionnés ci-dessus (bonne tenue en température, et coût de fabrication faible), ce détecteur présente une sensibilité de détection élevée puisqu'il permet une détection de quelques parties par million de gaz fluorhydrique en moins d'une minute. En outre, ses réponses sont parfaitement reproductibles et rapides (quelques minutes), et il est d'un faible coût de réalisation.

De plus, il présente une mise en oeuvre simple et son coût d'exploitation est faible ; ceci est en particulier dû à la propriété de la pastille de pouvoir être régénérée et réutilisée après détection, ce qui n'est pas le cas avec les systèmes du type papier pH ou tube colorimétrique.

En effet, le matériau colorimétrique utilisé dans l'invention présente un changement de couleur réversible. Comme matériau à changement de couleur réversible apte à être mis sous forme de poudre, on peut citer le méthylorange, le jaune de méthyle et le jaune de métanyle.

De préférence, on utilise le jaune de métanyle plus réactif que les deux autres matériaux colorimétriques ; c'est un composé de formule générale C₁₈H₁₄N₃NaO₃S comportant trois cycles benzéniques liés entre eux par des atomes d'azote. Sa formule générale est la suivante :

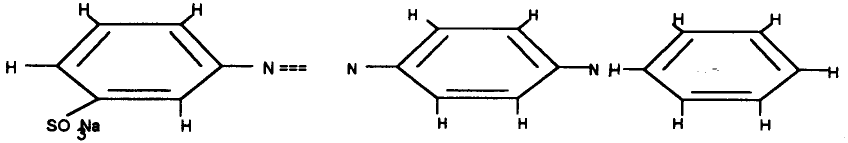

Le liant utilisé pour assurer la cohésion des grains de la poudre du matériau colorimétrique doit être inattaquable vis à vis des vapeurs d'acide tel que l'acide fluorhydrique, l'acide nitrique et l'acide chlorhydrique, et de dérivés fluorés tels que l'hexafluorure d'uranium (UF₆) et le trifluorure de chlore (ClF₃). En outre, il doit pouvoir supporter des températures d'au moins 130°C. Il est constitué d'un polymère organique thermodurcissable ou thermoplastique ou d'un composé minéral. En particulier, le liant est choisi parmi la cellulose, en particulier la cellulose microgranulaire, le kaolin, l'hydrogénophosphate de calcium, le bromure de potassium, la gomme arabique, la gomme adragante et l'hydroxycarbonate de magnésium.

De préférence, on utilise la cellulose microgranulaire.

Les quantités respectives de matériau colorimétrique et de liant doivent être telles que le changement de couleur soit détectable et que la pastille tienne mécaniquement. En général, la pastille contient de 10 à 50% en volume de matériau colorimétrique et de 90 à 50% en volume de liant. Pratiquement, on utilise 50% en volume de matériau colorimétrique et 50% en volume de liant, ce qui correspond à la meilleure réaction de virage.

La granulométrie des poudres est avantageusement inférieure à 25 µm.

Les moyens de détection du changement de couleur comprennent avantageusement une source de lumière pour éclairer la pastille, une photodiode pour transformer le signal lumineux issu de la pastille en un signal électrique, une électronique de traitement de ce signal électrique et des moyens d'alarme.

L'électronique de traitement comporte en particulier des moyens d'amplification du signal électrique, des moyens de comparaison de ce signal amplifié à une valeur seuil, et une source d'alimentation électrique.

Par ailleurs, les moyens d'alarme peuvent être du type sonore et/ou visuel.

L'un des avantages du détecteur de l'invention est de pouvoir dissocier la partie détecteur proprement dite, c'est-à-dire la pastille, de l'électronique de traitement. Ainsi, la pastille peut être placée dans une enceinte thermostatée ou règne des températures supérieures à 50°C mais inférieures à la température de fusion du liant, alors que l'électronique de détection et de traitement peut être placée en dehors de l'enceinte thermostatée et à distance de la pastille.

Aussi, selon un mode de réalisation préféré du détecteur de l'invention permettant d'effectuer l'examen colorimétrique à distance, la pastille est supportée par un adaptateur susceptible d'être introduit de façon étanche dans une enceinte à contrôler pour mettre la pastille en contact avec l'atmosphère de l'enceinte, cet adaptateur pouvant être couplé à un tube endoscopique permettant de détecter le changement de couleur de la pastille à l'extérieur de l'enceinte et cet adaptateur comportant une pièce transparente assurant l'étanchéité entre la pastille située dans l'enceinte et l'extrémité du tube endoscopique.

Avantageusement, le détecteur est caractérisé en ce que la pièce transparente est en polycarbonate.

De préférence, dans ce mode de réalisation, l'adaptateur comprend un guide creux à l'intérieur duquel peut coulisser le tube endoscopique, ce guide creux étant monté à l'une de ses extrémités dans un bouchon d'étanchéité susceptible d'être disposé dans une ouverture de l'enceinte à contrôler, et ce guide creux étant muni à son autre extrémité d'un support pour la pastille, la pièce transparente étant interposée à cette autre extrémité pour obturer le guide creux.

Ce mode de réalisation est particulièrement avantageux, car il permet d'introduire la pastille dans un milieu chaud et/ou contaminé, et de maintenir en dehors de ce milieu les moyens de détection du changement de couleur de la pastille.

D'autres caractéristiques et avantages de l'invention ressortiront mieux de la description qui va suivre, donnée à titre illustratif et non limitatif, en référence aux figures annexées.
- La figure 1 représente schématiquement un détecteur conforme à l'invention, et
- la figure 2 représente schématiquement l'ensemble formé par le détecteur et les moyens de détection.

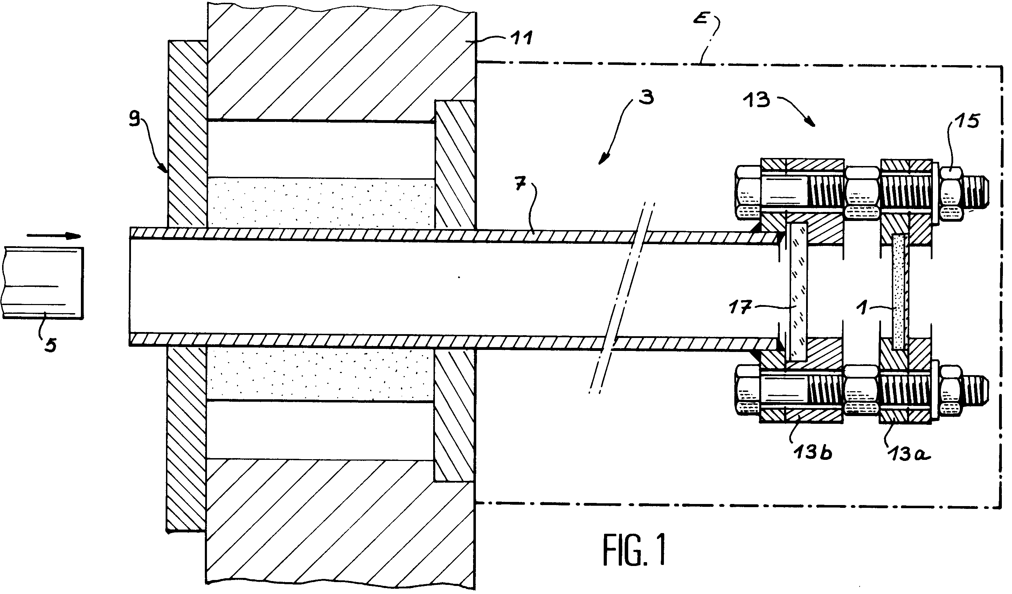

Sur la figure 1, on a représenté un détecteur conforme au mode de réalisation préféré de l'invention, qui comprend une pastille de détection 1 supportée par un adaptateur 3 introduit de façon étanche dans une enceinte E à contrôler, cet adaptateur pouvant être couplé à un tube endoscopique 5 afin d'examiner à distance le changement de couleur de la pastille 1.

Cet adaptateur comprend un guide tubulaire creux 7 à l'intérieur duquel peut coulisser le tube endoscopique 5. Le guide creux 7 est monté à l'une de ses extrémités dans un bouchon d'étanchéité creux 9, par exemple en acier inoxydable, disposé dans une ouverture de la paroi 11 de l'enceinte à contrôler. A son autre extrémité, le guide 7 est muni d'un support 13 comportant deux éléments 13a et 13b réunis par un système de vis 15 percés chacun d'un trou central pour recevoir respectivement la pastille 1 et une pièce transparente 17 obturant l'extrémité du guide 7 devant la pastille 1.

Cette pièce transparente peut être réalisée en polycarbonate, par exemple en Makrolon®.

Pour la détection d'acide fluorhydrique, la pastille 1 peut avoir un diamètre d'environ 25 mm et une épaisseur de 2 mm, et être composée d'un mélange de 50% en volume de poudre de jaune de métanyle, qui constitue la partie réactive de la pastille, et de 50% en volume de poudre de cellulose microgranulaire servant de liant. Le mélange des deux poudres a été compressé à froid sous une force de 10 tonnes pour obtenir la pastille.

En présence de vapeurs d'acide fluorhydrique, le jaune de métanyle passe du jaune au marron par fixation de deux atomes d'hydrogène sur les deux azotes adjacents. Lorsque les vapeurs d'acide fluorhydrique piégées sur la pastille descendent en dessous d'une certaine valeur (désorption, de la pastille), le jaune de métanyle reprend sa couleur initiale.

La pastille 1 est supportée par le support 13, qui peut être fabriqué dans un produit inattaquable par les vapeurs d'acide fluorhydrique ainsi que par les vapeurs de dérivés fluorés. Ce support peut être réalisé en polytétrafluoréthylène (PTFE), en fluoréthylène propylène (FEP), en polychlorotrifluoréthylène (PCTFE) ou en acier inoxydable.

L'ensemble de détection pastille-support est susceptible de supporter des températures de l'ordre de 130°C et détecter en 1 minute la présence de vapeurs d'acide fluorhydrique dans l'enceinte thermostatée E.

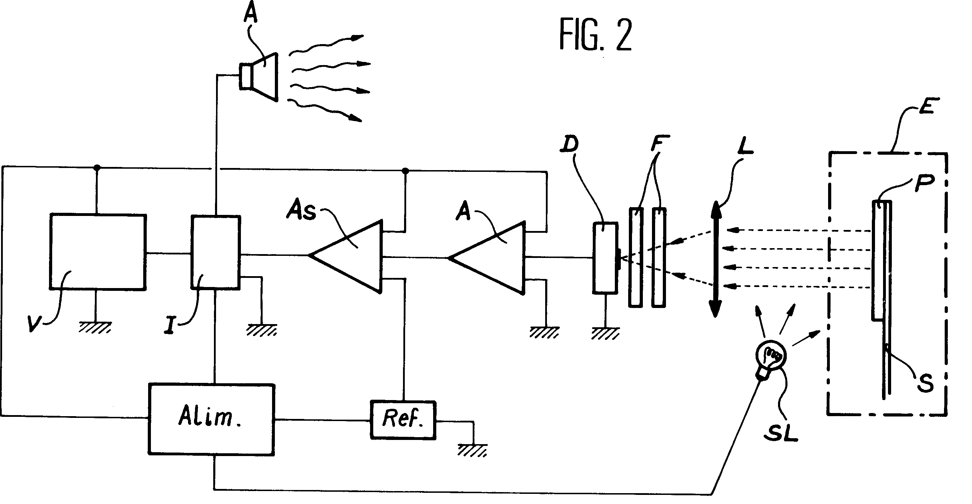

Le changement de couleur de la pastille 1 peut être détecté à distance en utilisant les moyens de détection représentés sur la figure 2. Bien entendu, ces moyens peuvent être utilisés également pour la détection directe du changement de couleur de la pastille.

Ainsi, pour assurer la visualisation du changement de couleur de la pastille 1 référencée P sur la figure 2, une source lumineuse SL alimentée en courant par une source d'alimentation électrique continue ou alternative Alim de 12V est placée en dehors de l'enceinte E de façon à éclairer la pastille P. Cette source SL est en particulier une lampe à halogène.

La lumière colorée issue de la pastille P, après traversée de l'enceinte E, est reçue par une lentille de focalisation L placée à 460 mm de la pastille P afin de focaliser cette lumière sur une photodiode D en silicium de 40mm² environ.

Afin de limiter l'incidence de la lumière ambiante sur la photodiode ainsi que celle de la source lumineuse SL, des filtres F sont prévus entre la photodiode et la lentille.

Pour une lampe à halogène de 460nm et une photodiode à réponse spectrale située entre 300 et 1100nm, et centrée à 800nm, on utilise un filtre optique à 510nm et un filtre infrarouge. Dans ces conditions, le bruit de fond de la lumière ambiante est réduit à une valeur négligeable devant le signal émis par la pastille ; le rapport signal bruit/sur signal de la pastille est de 30 environ.

La photodiode D délivre un signal électrique qui est amplifié par un premier amplificateur A à gain élevé (> à 1000).

Le signal électrique amplifié est alors reçu par un second amplificateur Aₛ à seuil permettant de positionner le gain du signal ainsi que la ligne de référence du signal. Cet amplificateur Aₛ est donc connecté à un circuit de référence Ref.

Le signal électrique issu de l'amplificateur à seuil Aₛ est reçu par une interface I commandant un circuit de visualisation V équipé par exemple de diodes électroluminescentes ainsi qu'une alarme sonore A.

Par ailleurs, les amplificateurs A et Aₛ, l'interface I, le dispositif de visualisation V et le circuit de référence Ref sont reliés à la source d'alimentation électrique Alim et à la masse.

Conformément à l'invention, le circuit de détection optique et l'électronique de traitement sont situés en dehors de l'enceinte thermostatée E. Ceux-ci peuvent donc être réalisés avec des éléments optiques et des circuits électriques connus destinés à fonctionner à basse température.

Lorsque le signal amplifié reçu par l'amplificateur Aₛ à seuil est supérieur à la valeur de référence, il envoie un signal électrique vers l'interface I de façon à déclencher l'alarme sonore A et le dispositif de visualisation V.

Des essais en température de la pastille P ont permis de montrer sa bonne tenue en température. Ainsi, la pastille P, après action d'une température de 130°C pendant 1 mois, n'a montré aucune modification du signal colorimétrique, ni dégradation physique.

## Revendications

1. Détecteur de vapeurs d'acide ou d'hexafluorure d'uranium, caractérisé en ce qu'il comprend une pastille de poudres comprimées, formée d'une première poudre d'un matériau colorimétrique réversible capable de changer de couleur en présence de vapeurs d'acide ou d'hexafluorure d'uranium et d'une seconde poudre inattaquable par des vapeurs dudit acide, d'hexafluorure d'uranium et/ou de dérivés fluorés, cette seconde poudre servant de liant aux grains de la première poudre.

2. Détecteur selon la revendication 1, caractérisé en ce que le matériau colorimétrique est le jaune de métanyle

3. Détecteur selon la revendication 1 ou 2, caractérisé en ce que la pastille contient de 10 à 50% en volume de matériau colorimétrique et de 90 à 50% en volume de liant.

4. Détecteur selon l'une quelconque des revendications 1 à 3, caractérisé en ce que le liant est choisi parmi la cellulose, le kaolin, l'hydrogénophosphate de calcium , le bromure de potassium, la gomme arabique, la gomme adragante et l'hydroxycarbonate de magnésium.

5. Détecteur selon l'une quelconque des revendications 1 à 4, caractérisé en ce que le liant est de la cellulose microgranulaire.

6. Détecteur selon l'une quelconque des revendications 1 à 9, caractérisé en ce que la pastille est supportée par un adaptateur susceptible d'être introduit de façon étanche dans une enceinte à contrôler pour mettre la pastille en contact avec l'atmosphère de l'enceinte, cet adaptateur pouvant être couplé à un tube endoscopique permettant de détecter le changement de couleur de la pastille à l'extérieur de l'enceinte et cet adaptateur comportant une pièce transparente assurant l'étanchéité entre la pastille située dans l'enceinte et l'extrémité du tube endoscopique.

7. Détecteur selon la revendication 10, caractérisé en ce que la pièce transparente est en polycarbonate.

8. Détecteur selon l'une quelconque des revendications 10 et 11, caractérisé en ce que l'adaptateur comprend un guide creux à l'intérieur duquel peut coulisser le tube endoscopique, ce guide creux étant monté à l'une de ses extrémités dans un bouchon d'étanchéité susceptible d'être disposé dans une ouverture de l'enceinte à contrôler, et ce guide creux étant muni à son autre extrémité d'un support pour la pastille, la pièce transparente étant interposée à cette autre extrémité pour obturer le guide creux.

9. Détecteur selon l'une quelconque des revendications 1 à 8, caractérisé en ce qu'il comprend de plus des moyens de détection du changement de couleur du matériau colorimétrique.

10. Détecteur selon la revendication 9, caractérisé en ce que les moyens de détection comprennent une source de lumière (S) pour éclairer la pastille (P), une photodiode (D) pour transformer le signal lumineux issu de la pastille en un signal électrique, une électronique de traitement (A, Aₛ) de ce signal électrique et des moyens d'alarme (A, V).

11. Détecteur selon la revendication 10, caractérisé en ce que l'électronique de traitement comporte des moyens d'amplification (A) du signal électrique, des moyens de comparaison (Aₛ) de ce signal amplifié à une valeur seuil, et une source d'alimentation électrique (Alim).

12. Détecteur selon la revendication 10 ou 11, caractérisé en ce qu'il comprend des filtres optiques (F) devant la photodiode afin d'éliminer la lumière parasite.

13. Détecteur selon l'une quelconque des revendications 10 à 12, caractérisé en ce qu'une lentille de focalisation (L) est prévue devant la photodiode (D) afin de focaliser la lumière émise par la pastille (P) sur la photodiode.

14. Détecteur selon l'une quelconque des revendications 1 à 13, caractérisé en ce que l'acide est l'acide fluorhydrique.
